# EUROPEAN PATENT SPECIFICATION

(11) **EP 0 445 818 B1**
(45) Date of publication and mention of the grant of the patent: **08.06.1994**
(21) Application number: 91103510.3
(22) Date of filing: 07.03.1991
(51) Int. Cl.: B23K 9/04, B23K 26/00

(54) **Method of modifying surface qualities of metallic articles and apparatus therefor**
Verfahren zum Verändern der Oberflächenqualität metallischer Gegenstände und Vorrichtung dafür
Procédé pour modifier les constitutions de la superficie des articles métalliques et appareil pour cela

(30) Priority: 07.03.1990 JP 53740/90; 20.04.1990 JP 102984/90; 31.05.1990 JP 139677/90
(43) Date of publication of application: 11.09.1991
(73) Proprietor: Isuzu Motors Limited, Shinagawa-ku, Tokyo 140 (JP)
(72) Inventor: Kamimura, Tadashi, Yokohama-shi, Kanagawa (JP); Tsujimura, Akira, Chigasaki-shi, Kanagawa (JP)
(74) Representative: Schaumburg, Thoenes & Thurn

(56) References cited:
- EP-A- 0 309 822
- DE-A- 1 615 330
- DE-A- 1 909 832
- DE-A- 2 223 992
- FR-A- 2 548 569
- US-A- 4 750 947
- PATENT ABSTRACTS OF JAPAN vol. 9, no. 98 (M-375)(1821) 27 April 1985,& JP-A-59 223174 (MITSUBISHI DENKI K.K.) 14 December 1984,
- E. BICKEL: "Die metallischen Werkstoffe des Maschinenbaues" 1961, SPRINGER-VERLAG, Berlin/Göttingen/Heidelberg

## Description

The present invention relates to a method of modifying qualities of a metallic article at its surface utilizing high density energy, and an apparatus therefor.

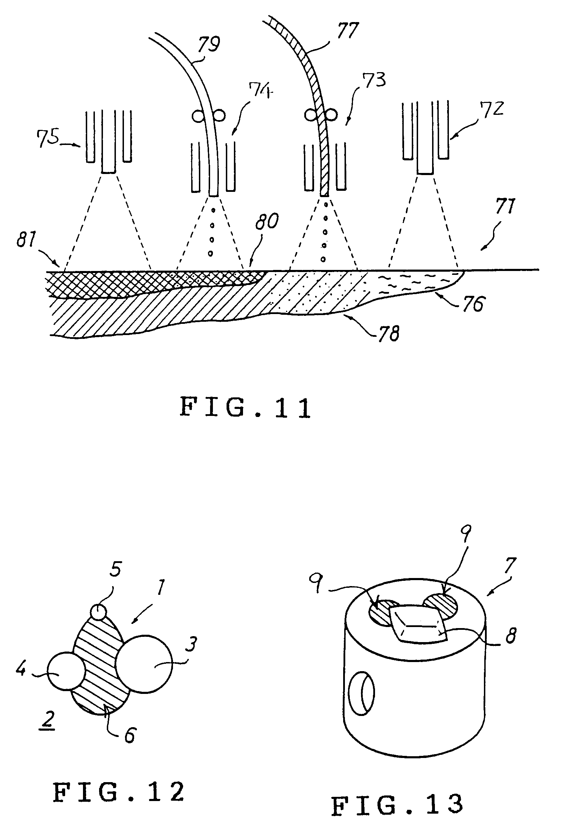

There is an increasing need of strengthening metallic parts, such as aluminum castings, at their local parts, particularly at specified locations in their surfaces (to be called the "object part" hereinafter). In automotive parts industries, for example, a cylinder head made of aluminum or cast iron should bear greater thermal and mechanical load as the engine output increases, because its operating temperature reaches a considerably high temperature. Such an increase in the load on the engine parts results in unexpected thermal crackings, as shown in Figure 12, between an intake port 3 and an exhaust port 4 (called "intervalve part 6", which is thinner than other portions), and between the intervalve part 6 and a fuel injection nozzle port 5 (or the preheater chamber port).

In addition, as shown in figure 13, a hatched portion 9 of a cylinder 7, which surrounds a combustion chamber 8 is also an object part since the hatched portion 9 bears a considerably high load.

As for the methods of meeting the modifying qualities of the object parts, there is known a "remelting method". This method is said to reach a certain degree of satisfaction in improving the resistance to thermal cracking (Kanazawa, Miyake and two others; "Development of aluminum alloy cylinder head for improving strength of its intervalve part by TIG remelting method", Toyota Gijutsu, Vol. 37, No. 2 (1987), pp. 112 - 119).

Many attempts have been made to supersede this method. The resulted techniques which may be called categorically the "remelting alloying method", are reviewed below in terms of their technical contexts and deficiencies:
1. The TIG welding method; While performing the remelting with a TIG welder, a suitable heat resisting metal or alloy is supplied as an alloy additive in powdery form to the TIG arc through a powder feeder. Since the amount of the alloying additive that can be added is 10 % at the most by the volumetric ratio, however, no great improvement can be achieved. If the addition is forcibly increased, the gas that is liberated by the matrix (Al casting) on alloying gets entrapped in the welded molten pool, forming and leaving there gas defects, especially porosity due to the formation of blowholes.
2. The electron beam remelting method: The alloying elements are either placed on the object part beforehand or fed thereto in the form of filler wire, and are remelted with an electron beam. The operation must be conducted in vacuo, i.e. the supply of the additive elements is both difficult and costly not only in operational practice but also mechanically; if powdery, they have to be prevented somehow from scattering on the one hand, and on the other hand the surfaces of the work piece other than the object parts have to be protected from getting contaminated with the scattered powder.
3. The laser method: Although lasers can be used in the ambient air, both the object part and the additive elements must either be sufficiently dark in colour or coated by a black paint, lest the absorption of the laser ray should be insufficient. Besides, laser-based apparatuses are still too expensive today.
4. The plasma welding method: This method operates in essentially the same way as the TIG method, except the depth of penetration being some 20 - 30 % smaller. The TIG's problem of overzealous addition resulting in formation of the gas defects is left unresolved.

As shown above, the currently available methods cannot be the practical techniques because of their characteristic faults.

FR-A-2 548 569 discloses a method comprising the steps of the generic part of claim 1 and an apparatus specified in the generic part of claim 18. In addition to forming a molten layer at the surface of a metallic article an overlay welding step results in a surface layer having a heat resisting element therein which strengthens the metallic article to a certain degree.

The primary purpose of this invention resides in markedly increasing the amount of heat resisting element or elements to be added (the "additive") to modify the quality of the specified surface part (the "object" part) of metallic articles so as to considerably improve their properties, for example, the resistance to thermal cracking.

Another purpose of this invention resides in providing an inexpensive method of and apparatus for modifying surface qualities of a metallic article.

The third purpose of this invention resides in making the alloy layer that has been formed on adding the additive free of gas defects such as blowholes, or other welding defects.

The fourth purpose of this invention resides in making the structure of that alloy layer homogeneous.

The fifth purpose of this invention resides in eliminating the need of pre-treating such as machining of the object part prior to the surface modification operation.

The sixth purpose of this invention resides in improving the productivity by increasing the welding speed pertaining to the quality modification operation.

The seventh purpose of this invention resides in increasing the depth of the penetration in forming the alloy layer overlay.

Now, as for the method of this invention, this invention relates, in the method of modifying the quality of the metallic article that comprises, according to the characterizing feature of the main claim, in addition to the steps mentioned above, the step of remelting the surface layer once again by high density energy. Advantageous further devolopments of this method are described in claims 2 to 17 whereas claims 18 to 23 specify an apparatus adapted to conduct the method.

As for the advantages of the present invention, a marked increase in the amount of additive addition can easily be attained without giving rise to welding defects such as gas defects, e.g. the porosity due to the formation of blowholes. Also, the alloy layer overlay formed is deeper in penetration, higher in the heat resistance such as the resistance to thermal crackings, freer of weld defects and more uniform in the structure than before. Moreover, the present invention needs no pretreatment of the object place such as machining, and allows welding at fast welding speed to improve the productivity.

Therefore, the present invention provides an inexpensive method and apparatus for improving the qualities of a specified surface part of the metallic article.
- Figure 1: is a schematic section of a first method of modifying a specified part of the surfaces of metallic articles (object part) and the apparatus therefor;
- Figure 2: is a schematic section showing the process of manufacturing a capsule particle to be used as a component of a welding powder in the process of Figure 1;
- Figure 3: is a sectional view of the capsule particle;
- Figure 4: shows a schematic view of the welding powder which is an agglomerate of the capsule particles of Figure 3;
- Figure 5: schematically shows a lateral section of a second method similar to the method shown in Figure 1;
- Figure 6: illustrates a perspective view of a process of manufacturing a composite wire to be used for the welding wire in the process of Figure 5;
- Figure 7: is a perspective view of the composite wire;
- Figure 8: shows a sectional view of an embodiment of the present invention;
- Figure 9: shows a sectional view of a modification of the present invention;
- Figure 10: shows, a sectional view of a further modification of the present invention;
- Figure 11: illustrates a schematic section of a further embodiment of the present invention;
- Figure 12: illustrates a bottom of a cylinder head and thereby explains problems existing in a prior art technique; and
- Figure 13: schematically illustrates a piston and thereby explains problems existing in the prior art technique.

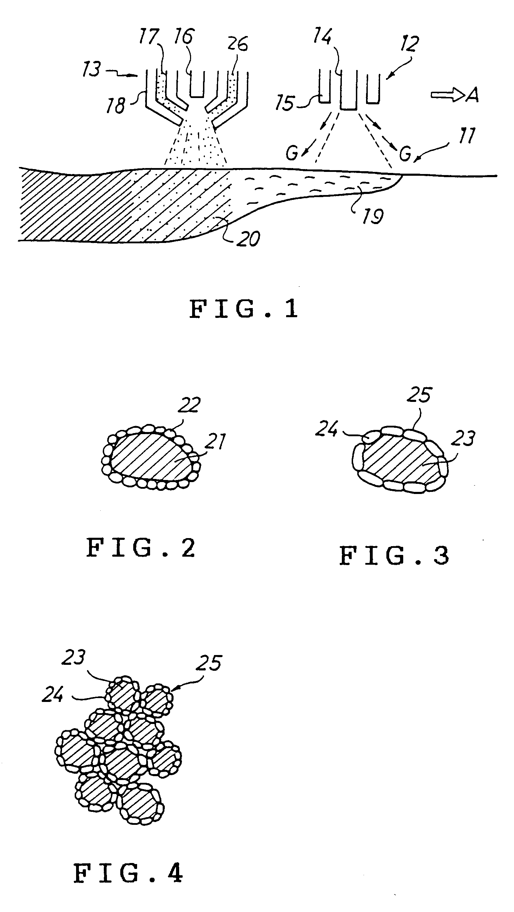

Figures 1, 5, 9 and 10 illustrate methods and apparatuses which do not fall within the scope of the claims.

Subsequently, basic methods and some preferred embodiments of the present invention as well as possible modifications will be described with reference to the accompanying drawings.

In Figure 1, a first method for modifying a specified surface part of a metallic article (object part) is illustrated and an apparatus therefor.

In this apparatus, the object part 11 of a cylinder head of an aluminium casting is first melted by high density energy, then heat resisting element(s) (additive) are added by overlay welding. The apparatus includes a first welding device and a second welding device. The first welding device may be a TIG torch 12 to conduct the high density energy to the object part 11. The second welding device may be a plasma welder 13 provided in tandem with the first welding device 12. The second welding device 13 is employed for performing the overlay welding using a powdery additive. The powdery additive may be Ni powder 26. In the TIG torch 12, an electrode 14 forms a welding arc and a nozzle 15 jets out inert gas G to shield off the arc and molten metal 19. In the plasma welder 13, the electrode 16 made of tungsten creates the welding arc. An inner nozzle 17 jets out working gas to increase the energy density by confining the welding arc within itself. An outer nozzle 18 feeds the Ni powder 26 on performing the overlay welding. As the pair of welding devices, i.e., the TIG torch 12 and the plasma welder 13, are kept moving along the object part surface 11 in the welding direction A with a predetermined distance being maintained between them, a molten metal layer 19 is formed by the TIG torch 12. Subsequently an overlaid layer 20, to which Ni is added to a predetermined content (alloy layer), is formed as the Ni powder is dissolved into the molten metal layer 19 by the plasma welder 13. Here, the benefit of providing the TIG torch 12 is two-fold; under the intensive heating of the TIG, the gas which would cause gas defects, (e.g. porosity) is easily released from the matrix metal, whereby gas defects in the alloy layer 20 are prevented, even if the additive content is considerably increased, for example to as much as 15 % or, in the case of Ni, even more. The TIG torch 12 works as a preheater for the plasma welder 13 so that not only the occurrence of weld cracking is effectively prevented, but also an ample penetration is ensured.

As for the first welding device, any device capable of producing adequately high density energy such as an electron beam, a laser and plasma may be used instead of the TIG torch 12, as long as the energy density meets the requirements set forth above. As for the additive 26, a heat resisting metal such as Cr, Mo and Co or even the capsule particles made by compositing dissimilar substances (will be described below) may be used as long as its nature as the additive meets the requirements mentioned above.

The capsule particles mentioned above may be manufactured as shown in Figure 2. This is to say that first, Ni particles 21 are prepared and Al particles 22 of a size about one tenth of that of the Ni particle 21 are allowed to adhere electrostatically onto the individual Ni particle. Then, as intermediate forms (preforms) they are charged into a vessel equipped with a bladed screw that rotates at a high speed of 8.000 to 16.000 rpm ( machine known as a centrifugal roll forming machine or a hybridizer) so that the preforms are subjected to the impact force which the gas stream exerts on them for 1 to 10 minutes. Through this process, not only individual capsule particles 25 are formed having a Ni particle 21 as core 23, and as well as smaller Al particles 22 completely enveloping the Ni particle 21 as a cover, but agglomerates of capsule particles 25 are formed, as illustrated in Figure 4, to serve conveniently for the welding additive powder 26.

Here, the core 23 of the capsule particle 25 may be any heat resisting metal such as Cr, Co and Mo instead of Ni, or may be even a ceramic such as Al₂O₃, SiC, Si₃O₄ and CuO. The enveloping particles 24 may be any metal such as Cu and its alloys that have a good miscibility with the matrix of the object part (Al).

It will be understood that the use of the capsule 25 promises an expected sufficient miscibility to the matrix Al of the object part, thereby ensuring perfect admixing of Ni with Al, hence excellent quality for the alloy layer 20.

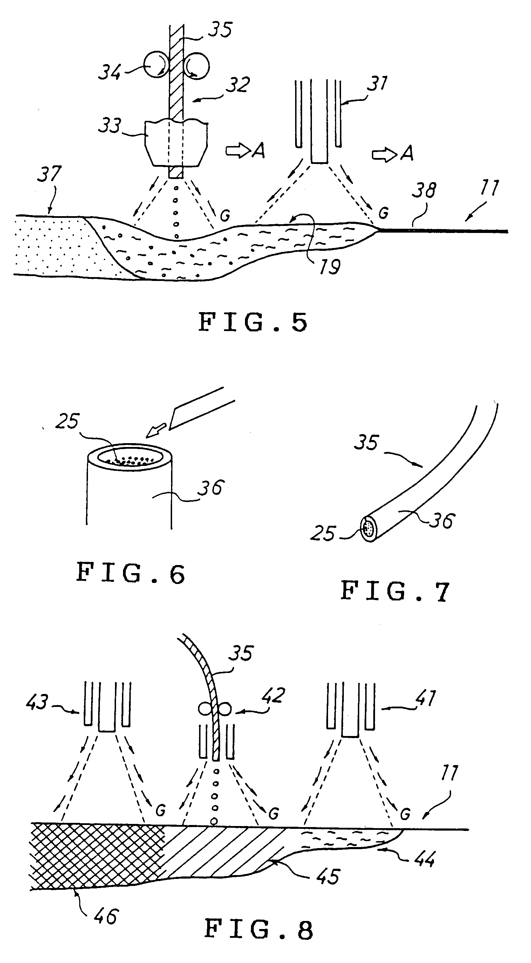

In a second method and apparatus which is similar to the first one and depicted in Figures 5 to 7, the object part is equally subjected to melting by a first welding device, then to alloying by a second overlay welding device. These two welding devices are arranged in a tandem relation to each other. The first welding device may be a TIG torch 31. The second welding device may be a MIG welder 32. In the MIG welder 32, a nozzle 33 jets out shield gas G. A wire feeder 34 feeds a welding wire which serves as a consumable electrode so as to carry out the overlay welding for the object part 11. In this method, too, a composite wire 35 that contains the capsule particles 25 introduced in the foregoing method may be used.

The composite wire 35 may be manufactured as shown in Figure 6; as sheath (tubing) 36 made of Al is filled with the capsule particles 25, then it is drawn into a composite wire 35 of diameter of 0.8 to 1.6 mm or thereabout. The composite wire 35 thus formed may be treated just like a known flux-cored welding wire.

By allowing the advance of the TIG torch 31 so as to create a molt pool of Al (molten layer metal layer 19) and by then letting the MIG welder 32 perform the overlay welding using the composite wire 35 as the consumable electrode, an alloy 37 is progressively formed as the Ni additive 27 is added to the molten metal layer 19 in the form of drippings from the composite wire 35.

Now, it will be further noted that even though the object part 19 is ordinarily covered with an oxide (Al₂O₃) film 38 resistive to MIG welding, the film 38 has been fractured by the action of the TIG torch 31 to expose the underlying Al matrix thereby facilitating the MIG welding. This means that no pretreatment such as machining of the object part 11 is necessary for taking advantage of MIG's fast welding speed. In addition, an occurrence of gas defects such as the formation of blowholes is effectively prevented so that the alloy layer 37 will be finished without welding defects. Furthermore, owing to the preheating by the TIG arc 31, the weld crackings are prevented and a surprisingly deep penetration is ensured. Moreover, owing to the use of the composite capsule 25, Ni as an additive is homogenously introduced into the molten metal layer 19 as described in connection with the previous method, so that not only the occurrence of weld cracking is effectively prevented, but also uniformity in both structure and composition is ensured for the alloy layer 37.

Other benefits are that by selecting the size of the core particle 21 in relation to that of the enveloping particles 22, the concentration of the additive can be controlled in the formed alloy layer as desired, and since the concentration of the heat resisting element with respect to Al, i.e. the state of admixing the additive and Al, is uniform all along the length of the composite wire 35, the welding operation is very well stabilized when using the composite wire 35.

The sheath 36, moreover, may be any metal other than Al as long as it has a reasonably good miscibility with Al. Cu and its alloys may be used. In addition, its cross section can have any configuration as long as it is suited for filling with and holding in itself the capsule particles 25; for example, a cross section such as those that are currently popular with the commercial flux-cored welding wires may be selected as desired.

In the apparatus of the invention shown in Figure 8, a third welding device (TIG torch 43) is employed and arranged in tandem with a first welding device (TIG torch latter two are employed as in the preceding devices. Here, the process comprises three continuous steps in series: the step of making a molten metal layer 44 by the leading TIG torch 41; the second step of forming an alloy layer 45 by the follow-up MIG welder using a composite wire 35; and the third step of remelting the alloy layer 45 by the trailing TIG torch 43 obtaining a remelt-treated alloy layer 46. The benefit of this method is that the additive content (for example, Ni) can be further raised and that the remelt-treated alloy layer 46 is further improved compared to the alloy layer 45 in that it is structurally more uniform apart from having no weld defects which is the main feature of the latter.

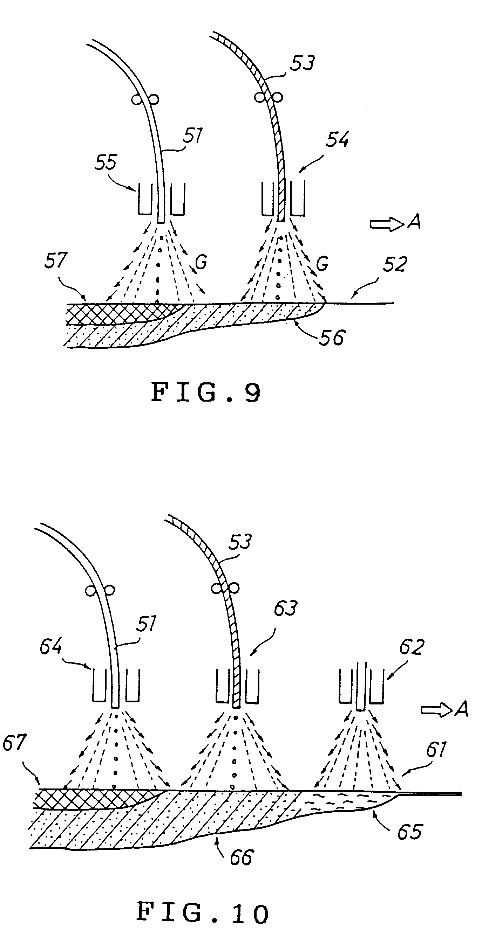

In the apparatus shown in Figure 9, an overlay welding step using a heat resisting steel wire 51 is added as a modification to the step of overlay welding using the composite wire 53 described in the foregoing.

One typical example of an object part is the intervalve part 52 of a cast iron cylinder head (shown in Figure 12 as the extended intervalve part 6). Here, two MIG welders 54 and 55 are employed in tandem, whereby the leading MIG 54 makes use of a composite wire 53, now having Cu tubing for its sheath and filled with capsule particles made up of a Co particle as core and Cu particles as envelope, while the trailing MIG takes a heat resisting metal wire 51 for the electrode. This is to say that a first heat resisting alloy layer 56 containing an appropriate content of Co is overlaid on the intervalve object part 52 by the leading MIG welder 52, on top of which a second heat resisting alloy layer 57 is overlaid by the trailing MIG welder 55.

Besides the well controlled large amount of additive addition, improved weldability owing to the use of the composite wire 53 as well as to the preheating effect the leading welding device brings about, one benefit of the method hereinbefore described is that precipitation of cementite and occurrence of crackings are well prevented. Especially, since Co has been added to the first alloy layer 56 as enveloped by Cu, a metal that has a high miscibility to Fe, alloy formation is done with great precision. This means that not only a uniform distribution of Co is ensured, but also embrittlement and occurrence of weld cracking due to cementite is effectively prevented, because cementite precipitation hardly occurs in such an alloy. Further, the first alloy layer 56 works as a buffer standing between the cast iron matrix and the second alloy layer 57. One conspicuous feature of this method is therefore that the use of the high speed MIG welders has become practicable, thereby attaining a higher degree of productivity.

As for the capsule particles 25 used here, moreover, many combinations other than the cited Co-Cu are possible: for example, Cr, Mo and the like for the heat resisting element or a ceramic particle such as SiC, CuO, Al₂O₃ and Si₃N₄ for the core are possible. In addition, for the enveloping particle and for the sheath, metals other than Cu can be used as well, as long as they have sufficiently good miscibility with cast iron.

In the modification which is illustrated in Figure 10, the object part 61 is first remelted by a first welding device (TIG torch 62), then overlaid with a heat resisting alloy layer at least twice by a second welding device. The second welding device includes a pair of MIG welders 63 and 64 disposed in tandem with each other. In this case, the overlay welding is performed using the composite wire 53 introduced in the preceding modification in the first round and using a heat resisting steel wire 51 in the second round. The overall result is the formation of a triple-layer overlay; first, a molten layer 65 by the TIG torch 62 which is overlaid with a Co-containing first heat resisting alloy layer 66 by the first MIG welder. This layer is in turn overlaid with a second heat resisting alloy layer 67 made by the second MIG welder using a heat resisting steel wire 51. This ensures a marked improvement in the heat resistance and effective prevention of thermal crackings.

Another feature of this modification is that, like in the case of aluminium casting described in the first three methods, the pretreatment such as machining of the object is unnecessary. Yet another feature is that owing to the use of the TIG torch 62 and the preheating effect arising therefrom, a marked improvement is made in penetration and weldability.

Here, the order of the welding wires in the second welding device is not to be considered as limited to the very combination cited above, which is a composite wire 53, then a heat resisting steel welding wire 51, another order or combination such as first a heat resisting steel wire, then a composite wire, or first a heat resisting steel wire and then a heat resisting steel wire, or first a composite wire and then another composite wire, are all admissible.

In addition, the following are examples for the heat resisting steel welding wire 51 mentioned in the foregoing modified methods.
- SUS 304 type:: JIS Z 3321 Y308 and Y308L;
- SUS 309 type:: JIS Z 3321 Y309 and Y309L;
- SUS 316 type:: JIS Z 3321 Y310 and Y316L;
- Ni-base alloy:: AWS A 5.14 ER Ni-1; and
- Inconel type:: AWS A 5.14 ER NiCr-3

Finally, in the embodiment of the present invention illustrated in Figure 11, not only is the object part 71 subjected to the melting-then-overlaying double-treatment as in the foregoing modified method, but the resultant overlay is remelted for the second time for further homogenization. Namely, the object part 71 is first melted by a first welding device which is a TIG torch 72, thereby forming the molten metal layer 64, then it is overlaid twice with heat resisting alloy layers 78 and 80 by a second welding device (first by a first MIG 73 with a Co-containing first heat resisting alloy layer 78 using a composite wire 77, then by a second MIG welder 74 with a second heat resisting alloy layer 80 using a heat resisting steel wire 79); then, subsequently and serially, the second heat resisting alloy layer 80 is subjected to the remelting treatment by a third welding device which is a TIG torch 75 thereby forming a remelted heat resisting alloy layer 81. The remelted heat resisting alloy layer 81 thus formed is of a greatly improved heat resistance and a markedly homogenized structure.

It is to be noted moreover that there can be many ways of using high density energy sources for the first, second and third welding devices other than the specific combinations shown in the foregoing devices. Namely, a TIG torch for the first and third welding device primarily to perform the melting or remelting, and a plasma welder or MIG welder for the second welding device primarily to perform the weld overlaying. The feasible, recommendable and preferable high energy sources are as presented in Table I.

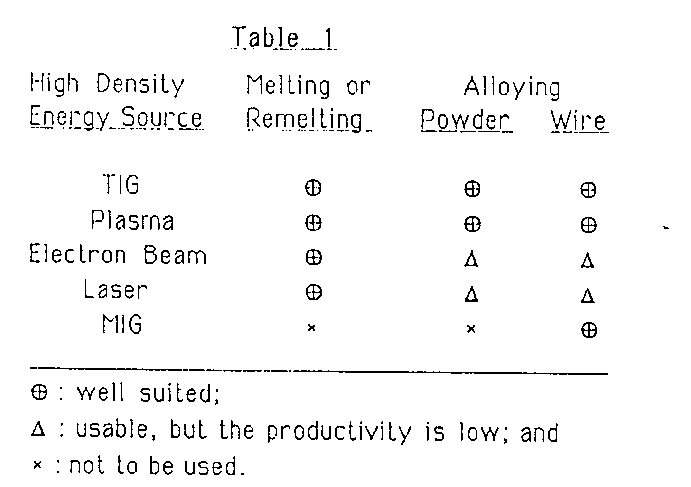

Here, the major features of these high density energy sources are as follows:
TIG: inexpensive and deep penetration obtainable;
Plasma: easy powder feeding;
Electron beam: thick alloyed layers obtainable;
Laser: ditto; and
MIG: high welding speed.

## Claims

1. A method of modifying qualities of a metallic article at its specified surface (11), comprising the steps of:
(A) melting the surface (11) with high density energy thereby forming a molten layer (44);
(B) adding to the molten layer a heat resisting element (45) by performing overlay welding thereon, thereby forming an alloy layer added with the heat resisting element (45); characterized by
(C) remelting the alloy layer (45) with high density energy.

2. The method of claim 1, characterized in that said overlay welding is performed at least twice.

3. The method of claim 1, or 2, characterized in that the overlay welding is performed using powders (26).

4. The method of claim 3, characterized in that each powder (26) includes heat resisting metal such as Ni, Co, Mo and Cr.

5. The method of claim 3 or 4, characterized in that the powder (26) includes capsule particles (25) made from a heat resisting element as a core (23) and metallic particles (24) as an envelope of the core element.

6. The method of claim 1 or 2, characterized in that the overlay welding is performed using a welding wire containing a heat resisting element (35).

7. The method of claim 6, characterized in that the welding electrode is a wire made of heat resisting steel (51).

8. A method of claim 6, characterized in that the welding electrode is a composite wire (35) made by filling a sheath (36) with capsule particles (25).

9. The method of claim 8, characterized by each capsule particle (25) being made by enveloping a core particle (23) with metallic particles (24), the core particle (23) being made from a heat resisting element; and performing said second overlay welding to the alloy layer (56) with a welding wire made of a heat resisting steel (51).

10. The method of claim 8, characterized by
(A) each capsule particle (25) being made by enveloping a core particle (23) with metallic particles (24), the core particle being made from heat resisting element;
(B) performing overlay welding to the specified surface part (61) with the high density energy, thereby forming a molten metal layer (65);
(C) performing overlay welding to the molten metal layer (65) by a MIG welder using the composite wire (53) made in the step (A), thereby forming an alloy layer (66); and
(D) performing overlay welding to the alloy layer (66) by a second MIG welder using a welding wire made of a heat resisting steel (51).

11. The method of any one of claim 5 and claims 8 to 10, characterized in that the core particle (23) of the capsule (25) is of a heat resisting metal such as Ni, Co, Mo and Cr, or a ceramic particle such as Al₂O₃, SiC, Si₃N₄ and CuO.

12. The method of any one of claim 5 and claims 8 to 11, characterized in that the surface part (61) of the article has a matrix and the enveloping metallic particles (24) of the capsule (25) are of a metal of good miscibility with the matrix of the surface part (61).

13. The method of any one of claim 5 and claims 8 to 10, characterized in that the surface part (61) of the article has a matrix and the sheath (36) of the composite wire (35) is of a metal of good miscibility with the matrix of the surface part (61).

14. The method of any one of claims 1, 2 and claims 9 and 10, characterized in that the high density energy to perform the melting or the remelting is created by a TIG, plasma, electron beam or laser beam welder.

15. The method of any one of claims 3 to 5, characterized in that the overlay welding using the powders (26) is performed by a TIG welder or a plasma welder.

16. The method of any one of claim 6 and claims 7 to 9, characterized in that the overlay welding using the welding wire (35, 55, 51, 77 or 79) is performed by a TIG welder, a plasma welder or a MIG welder.

17. The method of any one of claims 2 or 9, characterized in that at least one of the repetitious overlay weldings is performed by a MIG welder.

18. An apparatus suitable for performing the method of claim 1, comprising :
a first welding device (12) for imparting, while translating itself in a given direction (A), high density energy to the surface part (11); and
a second welding device (13) disposed behind the first welding device (12) with respect to the given direction (A) with a predetermined distance being maintained from the first welding device (12) for performing overlay welding
characterized by
a heat resisting element in said second welding device (13) for performing overlay welding; and
a third device (43) disposed behind the second welding device (42) in the given direction at a predetermined distance for imparting the high density energy.

19. The apparatus of claim 18, characterized in that the second welding device (42) includes at least two welding elements (63, 64) arranged in series.

20. The apparatus of claim 18 or 19 characterized in that the first welding device (12; 31; 62; 72) is any one of TIG, plasma, electron beam or laser welder.

21. The apparatus of any one of claims 18 to 20, characterized in that the second welding device (13; 32; 42; 63; 64; 72; 73) is any one of TIG, plasma or MIG welder.

22. The apparatus of any one of claims 18 to 21, characterized in that the third welding device (43; 64; 74) is any one of TIG, plasma, electron beam or laser welder.

23. The apparatus of any one of claims 18 to 22,
characterized by
a first MIG welder (54) for performing overlay welding to the surface part (52) using a composite wire (35) manufactured by filling up a sheath (36) with capsule particles (25) , each capsule particle being made of a core particle (23) of a heat resisting element and enveloping metallic particles (24); and
a second MIG welder (55) disposed behing the first MIG welder (54) in a given direction with a predetermined distance being maintained from the first MIG welder (54) for performing overlay welding using a welding wire made of a heat resisting steel (51).

## Patentansprüche

1. Verfahren zum Ändern der Qualitäten eines metallischen Gegenstands an einer bestimmten Oberfläche (11), umfassend die folgenden Schritte:
(A) Schmelzen der Oberfläche (11) mit Energie hoher Dichte, wodurch eine Schmelzschicht gebildet wird;
(B) Hinzufügen eines wärmebeständigen Elements (45) zu der Schmelzschicht durch dortiges Auftragsschweißen, wodurch eine Legierungsschicht gebildet wird, die mit dem wärmebeständigen Element (45) ergänzt wurde;
gekennzeichnet durch:
(C) erneutes Schmelzen der Legierungsschicht (45) mit Energie hoher Dichte.

2. Verfahren nach Anspruch 1, dadurch gekennzeichnet, daß das Auftragsschweißen zumindest zweimal durchgeführt wird.

3. Verfahren nach Anspruch 1 oder 2, dadurch gekennzeichnet, daß das Auftragsschweißen unter Verwendung von Pulvern (26) durchgeführt wird.

4. Verfahren nach Anspruch 3, dadurch gekennzeichnet, daß jedes Pulver (26) wärmebeständiges Metall wie Ni, Co, Mo und Cr enthält.

5. Verfahren nach Anspruch 3 oder 4, dadurch gekennzeichnet, daß das Pulver (26) aus einem wärmebeständigen Element hergestellte Kapselteilchen (25) als Kern (23) und Metallteilchen (24) als Hülle des Kernelements enthält.

6. Verfahren nach Anspruch 1 oder 2, dadurch gekennzeichnet, daß das Auftragsschweißen unter Verwendung eines Schweißdrahts durchgeführt wird, der ein wärmebeständiges Element (35) enthält.

7. Verfahren nach Anspruch 6, dadurch gekennzeichnet, daß die Schweißelektrode ein aus warmfestem Stahl (51) hergestellter Draht ist.

8. Verfahren nach Anspruch 6, dadurch gekennzeichnet, daß die Schweißelektrode ein Verbunddraht (35) ist, der durch Füllen eines Mantels (36) mit Kapselteilchen (25) hergestellt ist.

9. Verfahren nach Anspruch 8, dadurch gekennzeichnet, daß jedes Kapselteilchen (25) hergestellt wird durch Umhüllen eines Kernteilchens (23) mit metallischen Teilchen (24), wobei das Kernteilchen (23) aus einem wärmebeständigen Element hergestellt ist, und daß das zweite Auftragsschweißen auf die Legierungsschicht (56) mit einem aus warmfestem Stahl (51) bestehenden Schweißdraht durchgeführt wird.

10. Verfahren nach Anspruch 8, dadurch gekennzeichnet:
(A) daß jedes Kapselteilchen (25) durch Umhüllen eines Kernteilchens (23) mit metallischen Teilchen (24) hergestellt wird, wobei das Kernteilchen aus einem wärmebeständigen Element hergestellt ist;
(B) daß das Auftragsschweißen mit Energie hoher Dichte an dem bestimmten Oberflächenbereich (61) durchgeführt und dadurch eine geschmolzene Metallschicht (65) gebildet wird;
(C) daß das Auftragsschweißen auf die geschmolzene Metallschicht (65) durch ein MIG-Schweißgerät unter Verwendung des in Schritt (A) hergestellten Verbunddrahts (53) durchgeführt und dadurch eine Legierungsschicht (66) gebildet wird und
(D) daß das Auftragsschweißen auf die Legierungsschicht (66) durch ein zweites MIG-Schweißgerät unter Verwendung eines aus warmfestem Stahl (51) hergestellten Schweißdrahts durchgeführt wird.

11. Verfahren nach einem der Ansprüche 5 und 8 bis 10, dadurch gekennzeichnet, daß das Kernteilchen (23) der Kapsel (25) aus warmfestem Material wie Ni, Co, Mo und Cr oder aus einem keramischen Teilchen wie Al₂O₃, SiC, Si₃N₄ und CuO besteht.

12. Verfahren nach einem der Ansprüche 5 und 8 bis 11, dadurch gekennzeichnet, daß der Oberflächenbereich (61) des Gegenstandes eine Matrix hat und daß die Hüllmetallteilchen (24) der Kapsel (25) aus einem Metall bestehen, das über eine gute Mischbarkeit mit der Matrix des Oberflächenbereichs (61) verfügt.

13. Verfahren nach einem der Ansprüche 5 und 8 bis 10, dadurch gekennzeichnet, daß der Oberflächenbereich (61) des Gegenstands eine Matrix hat und daß der Mantel (36) des Verbunddrahts (35) aus einem Metall besteht, das über eine gute Mischbarkeit mit der Matrix des Oberflächenbereichs (61) verfügt.

14. Verfahren nach einem der Ansprüche 1, 2, 9 und 10, dadurch gekennzeichnet, daß die hochdichte Energie zum Schmelzen oder erneuten Schmelzen durch ein TIG-, Plasma-, Elektronenstrahl- oder Laserstrahl-Schweißgerät erzeugt wird.

15. Verfahren nach einem der Ansprüche 3 bis 5, dadurch gekennzeichnet, daß das Auftragsschweißen unter Verwendung der Pulver (26) mit einem TIG-Schweißgerät oder Plasmaschweißgerät durchgeführt wird.

16. Verfahren nach einem der Ansprüche 6 und 7 bis 9, dadurch gekennzeichnet, daß das Auftragsschweißen unter Verwendung des Schweißdrahts (35, 55, 51, 77 oder 79) mit einem TIG-Schweißgerät, einem Plasmaschweißgerät oder einem MIG-Schweißgerät durchgeführt wird.

17. Verfahren nach einem der Ansprüche 2 oder 9, dadurch gekennzeichnet, daß zumindest einer der wiederholten Auftragsschweißvorgänge mit einem MIG-Schweißgerät durchgeführt wird.

18. Vorrichtung, die zur Durchführung des Verfahrens nach Anspruch 1 geeignet ist, umfassend:
ein erstes Schweißgerät (12), das während seiner Translation in einer gegebenen Richtung (A) den Oberflächenbereich (11) mit Energie hoher Dichte beaufschlagt;
und ein zweites Schweißgerät (13), das zur Durchführung des Auftragsschweißvorgangs in bezug auf die gegebene Richtung (A) unter Einhaltung eines vorgegebenen Abstands zu dem ersten Schweißgerät (12) hinter diesem angeordnet ist;
gekennzeichnet durch:
ein wärmebeständiges Element in dem zweiten Schweißgerät (13) zur Ausführung des Auftragsschweißens;
und ein drittes Gerät (43), das zur Ausübung von Energie hoher Dichte in der gegebenen Richtung mit einem vorgegebenen Abstand hinter dem zweiten Schweißgerät (42) angeordnet ist.

19. Vorrichtung nach Anspruch 18, dadurch gekennzeichnet, daß das zweite Schweißgerät (42) zumindest zwei in Reihe angeordnete Schweißelemente (63, 46) enthält.

20. Vorrichtung nach Anspruch 18 oder 19, dadurch gekennzeichnet, daß das erste Schweißgerät (12; 31; 62; 72) ein TIG-, Plasma-, Elektronenstrahl- oder Laserschweißgerät ist.

21. Vorrichtung nach einem der Ansprüche 18 bis 20, dadurch gekennzeichnet, daß das zweite Schweißgerät (13; 32; 42; 63; 64; 72; 73) ein TIG-, Plasma- oder MIG-Schweißgerät ist.

22. Vorrichtung nach einem der Ansprüche 18 bis 21, dadurch gekennzeichnet, daß das dritte Schweißgerät (43; 64; 74) ein TIG-, Plasma-, Elektronenstrahl- oder Laserschweißgerät ist.

23. Vorrichtung nach einem der Ansprüche 18 bis 22, gekennzeichnet durch:
ein erstes MIG-Schweißgerät (54) zur Durchführung des Auftragsschweißens an dem Oberflächenbereich (52) unter Verwendung eines Verbunddrahts (35), der durch Auffüllen eines Mantels (36) mit Kapselteilchen (25) hergestellt wurde, wobei jedes Kapselteilchen aus einem Kernteilchen (23) aus einem wärmebeständigen Element und aus metallischen Hüllteilchen (24) besteht;
und ein zweites MIG-Schweißgerät (55), das zur Durchführung des Auftragsschweißvorgangs unter Verwendung eines aus warmfestem Stahl (51) hergestellten Schweißdrahts in einer gegebenen Richtung unter Einhaltung eines vorgegebenen Abstands zu dem ersten MIG-Schweißgerät (54) hinter diesem angeordnet ist.

## Revendications

1. Procédé de modification des caractéristiques d'une surface spécifique (11) d'une pièce métallique, comprenant les phases suivantes :
(A) fusion de la surface (11) sous l'effet d'une grande quantité densité d'énergie pour former une couche en fusion (14);
(B) adjonction à ladite couche en fusion d'un élément résistant à la chaleur (45) par exécution d'une soudure de recouvrement sur ladite surface en fusion, ce qui a pour effet de former une couche d'alliage contenant un élément résistant à la chaleur (45) ; caractérisé par :
(C) une seconde fusion appliquée à la couche d'alliage (45) sous l'effet d'une grande densité d'énergie.

2. Procédé selon la revendication 1, caractérisé par le fait que ladite opération de soudure de recouvrement est effectuée au moins deux fois.

3. Procédé selon la revendication 1 ou selon la revendication 2, caractérisé par le fait que l'opération de soudure de recouvrement est effectuée à l'aide de poudres (26).

4. Procédé selon la revendication 3, caractérisé par le fait que chaque poudre (26) contient un métal résistant à la chaleur comme du Ni, du Co, du Mo et du Cr.

5. Procédé selon la revendication 3 ou selon la revendication 4, caractérisé par le fait que la poudre (26) contient des particules en capsule (25) comportant comme noyau (23) un élément résistant à la chaleur et comme enveloppe de l'élément noyau des particules métalliques (24).

6. Procédé selon la revendication 1 ou selon la revendication 2, caractérisé par le fait que la soudure de recouvrement est effectuée à l'aide d'un fil de soudure contenant un élément de résistance chauffante (35).

7. Procédé selon la revendication 6, caractérisé par le fait que l'électrode de soudure est un fil d'acier résistant à la chaleur (51).

8. Procédé selon la revendication 6, caractérisé par le fait que l'électrode de soudure est un fil composite (35) comprenant une gaine (36) remplie de particules en capsule (25)

9. Procédé selon la revendication 8, caractérisé par le fait que chaque particule en capsule (25) est constituée d'un noyau particule (23) enveloppé de particules métalliques (24), ledit noyau particule (23) étant confectionné dans un élément résistant à la chaleur; et par l'exécution d'une seconde soudure de recouvrement sur ladite seconde couche d'alliage (56) à l'aide d'un fil de soudure confectionné dans un acier résistant à la chaleur (51).

10. Procédé selon la revendication 8, caractérisé par le fait que :
(A) chaque particule en capsule (25) est constituée par un noyau particule (23) dans une enveloppe de particules métalliques (24), le noyau de particules étant confectionné dans un élément résistant à la chaleur ; et par
(B) l'exécution d'une soudure de recouvrement sur ladite partie de surface spécifique (61) par application d'une grande densité d'énergie, ce qui permet de former une couche de métal en fusion (65);
(C) l'exécution d'une soudure de recouvrement sur la couche de métal en fusion (65) à l'aide d'un appareil de soudure MIG avec un fil composite (53) confectionné de la manière indiquée en (A), ce qui permet de former une couche d'alliage (66) ; ainsi que
(D) l'exécution d'une soudure de recouvrement sur ladite couche d'alliage (66) à l'aide d'un second appareil de soudure MIG avec un fil de soudure en acier résistant à la chaleur (51).

11. Procédé selon la revendication 5 et selon les revendications 8 à 10, caractérisé par le fait que le noyau particule (23) de la capsule (25) est en métal résistant à la chaleur comme le Ni, le Co et le Cr, ou en particules de céramique comme de l'Al203, du SiC, du Si3N4 et du CuO.

12. Procédé selon l'une quelconque des revendications 5 et 8 à 11, caractérisé par le fait que la partie de surface (61) de la pièce a une matrice et que les particules métalliques (24) servant d'enveloppe à la capsule (25) sont en métal de bonne miscibilité avec la matrice de la partie de surface (61).

13. Procédé selon l'une quelconque des revendications 5 et 8 à 10, caractérisé par le fait que la partie de surface (61) de la pièce a une matrice et que la gaine (36) du fil composite (35) est en métal ayant une bonne miscibilité avec la matrice de la partie de surface (61).

14. Procédé selon la revendication 1 ou la revendication 2 et selon les revendications 9 et 10, caractérisé par le fait que la grande densité d'énergie nécessaire pour exécuter la première fusion ou la seconde fusion est générée par un appareil de soudure TIG ou un appareil de soudure au plasma ou un apparail de soudure à faisceau d'électrons ou un apparail de soudure au rayon laser.

15. Procédé selon l'une quelconque des revendications 3 à 5, caractérisé par le fait que la soudure de recouvrement effectuée à l'aide de poudres (26) est exécutée par l'emploi d'un appareil de soudure TIG ou d'un appareil de soudure au plasma.

16. Procédé selon l'une quelconque des revendications 6 et 7 à 9, caractérisé par le fait qu'on utilise un appareil de soudure TIG, un appareil de soudure au plasma ou un appareil de soudure MIG pour exécuter la soudure de recouvrement à l'aide d'un fil de soudure (35, 55, 51, 77 ou 79).

17. Procédé selon la revendication 2 ou selon la revendication 9, caractérisé par le fait qu'au moins l'une des opérations répétées de soudure de recouvrement est effectuée à l'aide d'un appareil de soudure MIG.

18. Appareil convenant à la mise en oeuvre du procédé selon la revendication 1, comprenant :
un premier dispositif de soudure (12) qui fournit pendant sa translation automatique dans une direction donnée (A) une grande densité d'énergie à la partie de surface (11); et
un second dispositif de soudure (13) placé derrière ledit premier dispositif de soudure (12) par rapport à la direction donnée (A) et maintenu à une distance prédéterminée par rapport audit premier dispositif de soudure (12) pour effectuer une soudure de recouvrement, caractérisé par le fait qu'on utilise un élément résistant à la chaleur dans ledit second dispositif de soudure (13) pour exécuter la soudure de recouvrement ; et un troisième dispositif (43) placé derrière le second dispositif de soudure (42) par rapport à la direction donnée et à une distance prédéterminée pour générer la grande densité d'énergie.

19. Appareil selon la revendication 18, caractérisé par le fait que ledit second dispositif de soudure (42) comporte au moins deux éléments soudeurs (63, 64) disposés en série.

20. Appareil selon la revendication 18 ou selon la revendication 19, caractérisé par le fait que le premier dispositif de soudure (12; 31; 62; 72) est un appareil de soudure TIG, un appareil de soudure au plasma, un appareil de soudure à faisceau d'électrons ou un appareil de soudure au laser.

21. Appareil selon l'une quelconque des revendications 18 à 20, caractérisé par le fait que le second dispositif de soudure (13; 32; 42; 63; 64; 72; 73) est un appareil de soudure TIG, un appareil de soudure au plasma ou un appareil de soudure MIG.

22. Appareil selon l'une quelconque des revendications 18 à 21, caractérisé par le fait que le troisième dispositif de soudure (43; 64; 74) est un appareil de soudure TIG, un appareil de soudure au plasma, un appareil de soudure à faisceau d'électrons ou un appareil de soudure au laser.

23. Appareil selon l'une quelconque des revendications 18 à 22, caractérisé par :
un premier appareil de soudure MIG (54) utilisé pour exécuter une soudure de recouvrement sur la partie de surface (52) à l'aide d'un fil composite (35) réalisé par remplissage d'une gaine (36) avec des particules en capsule (25), chaque particule en capsule comprenant une particule noyau (23) faite dans un élément résistant à la chaleur et enveloppée de particules métalliques (24); et
un second appareil de soudure MIG (55) disposé derrière le premier dispositif de soudure (54) par rapport à une direction donnée, à une distance prédéterminée du premier dispositif de soudure MIG (54) pour exécuter une soudure de recouvrement à l'aide d'un fil de soudure confectionné dans un acier résistant à la chaleur (51).
